Europäisches Patentamt

European Patent Office

Office européen des brevets

(11) Publication number: **0 465 907 A1**

# EUROPEAN PATENT APPLICATION

(21) Application number: **91110374.5**

(22) Date of filing: **24.06.91**

(51) Int. Cl.5: **A01N 41/04**

(30) Priority: **27.06.90 IT 2077790**

(43) Date of publication of application:
**15.01.92 Bulletin 92/03**

(84) Designated Contracting States:
**AT BE CH DE DK ES FR GB GR IT LI LU NL SE**

(71) Applicant: **LUIGI STOPPANI S.p.A.**
**Corso Magenta, 85**
**I-20123 Milan(IT)**

(72) Inventor: **Bruschi, Enrico**
**Corso Dogali, 7/5**
**Genova(IT)**
Inventor: **Bonati, Stefano**
**Via Cavezzali, 6**
**I-20127 Milano(IT)**

(74) Representative: **Dr. Ing. A. Racheli & C.**
**Viale San Michele del Carso, 4**
**I-20144 Milano(IT)**

(54) Method and composition for stimulating the growth of vegetables.

(57) A method for stimulating the growth and ripening of plants, horticultural products and vegetables in general foresees the treatment of the said vegetables, wholly or in part and/or of their cultivation medium with a composition containing at least one adduct of menadione bisulphite and a compound chosen from: nicotinamide, nicotinic acid, thyamine, p-aminobenzoic acid, tryptophan, histidine, adenine; with one or more solid or liquid, organic or inorganic excipients acceptable in agriculture.

EP 0 465 907 A1

The present invention relates to a method and a composition to stimulate and regulate the growth of vegetable produce in general. More particularly, the invention relates to a method and a composition for stimulating the growth of vegetables by means of adducts of vitamin K3, or menadione, as a bisulphite with particular vitaminic compounds or amino-acids.

The term "growth" is intended here to describe any type of development of the vegetables, from their germination and real growth to their ripening and root growth.

It is easy to see the advantages which derive from the possibility of speeding up the growth of plants increasing their yield, having an earlier harvest period, speeding up their ripening, but still keeping their quality unaltered.

Operators in the sector are very interested in techniques which allow the above results to be achieved, and at present many researches and experiments are being carried out at a pace, regarding the application of different active principles.

It is known that menadione sodium bisulphite and its derivatives or correlatable substances with vitamin K action, such as salts of inorganic acids with menadiol, esters of inorganic acids with menadiol and similar, are substances capable of stimulating the growth of plants.

Products of this type are known and can be found on the market, but have two main disadvantages: on the one hand, they are relatively unstable, and on the other they generally have a synthetic origin and may give rise to problems in the degradability of their parts. The aim of this invention, therefore, is to realize a method and composition for stimulating and controlling the growth of vegetables which resolves the problems of stability and harmlessness described above.

Surprisingly it has been observed that some adducts of menadione bisulphite and certain vitamins and amino-acids have both stimulating properties for vegetable growth and ripening which are considerably higher than those of known analogous products based on vitamin K, and also the desired properties of stability and harmlessness, in that they are composed of natural products.

More particularly, the invention provides a method for stimulating and controlling the growth of vegetables, characterized in applying on at least a part of the said vegetables and/or their growing medium a composition comprising at least one adduct of menadione bisulphite with a compound selected from among: nicotinamide, thiamine, p-aminobenzoic acid, tryptophan, histidine, adenine and nicotinic acid.

The invention also provides a composition for stimulating and controlling the growth of vegetables, characterized in that it comprises at least one adduct of menadione bisulphite with a compound chosen from among: nicotinamide, thiamine, p-aminobenzoic acid (P.A.B.A.), tryptophan, histidine, adenine and nicotinic acid.

The surprising effects of growth stimulation presumably are due to a synergic effect of the menadione bisulphite with the vitaminic compounds and amino-acids forming with it the adduct and which increase the stimulating activity of the vitamin K3.

The amount of the stimulating and controlling effect of the above-mentioned compositions according to the invention is still more surprising when it is considered that the low level of solubility of the adducts would lead to the supposition that the level of their absorption by the vegetables would be very low.

The adducts which make up, alone or in mixture with each other, the active principle of the composition according to the invention are known in the art as additives for livestock feeds and are the object of Italian Patent No. 1097391 and of the corresponding English Patent No. GB 2025976 in the applicant's name. Reference is made to these patents for information concerning the synthesis and the characterization of the said compounds, whose most important properties are briefly listed below.

Menadione nicotinamide bisulphite

Adducts of menadione bisulphite with nicotinamide, a well defined chemical compound with K vitaminic activity and PP vitaminic activity compound.

| Basic formula: | $C_{17}H_{16}O_6N_2S$ |
| --- | --- |
| Molecular weight: | 376.39 |
| Menadione: | 45.74% by weight |
| Nicotinamide: | 32.44% by weight |
| Solubility: | 1.5 g in 100 ml at 25° C |

Menadione thiamine bisulphite

An adduct of menadione bisulphite with thiamine, a well defined chemical compound with a K vitamine activity and a B1 vitamine activity.

| Basic formula: | $C_{23}H_{27}C_1N_4O_6S_2$ |
|---|---|
| Molecular weight: | 555.17 |
| Menadione: | 44.57% by weight |
| Thiamine: | 43.66% by weight |
| Solubility: | 6.0 in 100 ml at 25° C |

Menadione p-aminobenzoic acid bisulphite

| Basic formula: | $C_{18}H_{17}O_7NS$ |
|---|---|
| Molecular weight: | 391.4 |
| Menadione: | 43.99% by weight |
| P.A.B.A.: | 35.03% by weight |
| Solubility: | 5.5 g in 100 ml at 25° C |

Menadione histidine bisulphite

| Basic formula: | $C_{17}H_{19}N_3O_7S$ |
|---|---|
| Molecular weight: | 409.08 |
| Menadione: | 42.09% by weight |
| Histidine: | 37.92% by weight |
| Solubility: | 1.5 g in 100 ml at 25° C |

Menadione adenine bisulphite

| Basic formula: | $C_{16}H_{15}N_5O_5S$ |
|---|---|
| Molecular weight: | 389.06 |
| Menadione: | 44.25% by weight |
| Adenine: | 34.73% by weight |
| Solubility: | 0.7 g in 100 ml at 25° C |

Menadione nicotinic acid bisulphite

| Basic formula: | $C_{17}H_{15}O_7NS$ |
|---|---|
| Molecular weight: | 377.07 |
| Menadione: | 45.66% by weight |
| Nicotinic acid: | 32.64% by weight |
| Solubility: | 15 g in 100 ml at 25° C |

Menadione tryptophan bisulphite

| Basic formula: | $C_{22}H_{22}N_2O_7S$ |
| --- | --- |
| Molecular weight: | 458.51 |
| Menadione: | 37.55% by weight |
| Tryptophan: | 44.53% by weight |
| Solubility: | 1.7 g in 100 ml at 25°C |

Some of these adducts are commercially available as feed additives; for example, menadione nicotinamide bisulphite is on sale under the name of Kavist (registered trademark).

As previously mentioned, the said adducts can be present in the compositions by themselves or in mixture with each other; the composition will preferably also comprise one or more chelated trace elements acting as micronutrients. A non-limitative example of the said chelates are the compounds of EDTA with Mg, Co, Ni and Fe. The composition according to the invention preferably also comprises an amino-acid pool containing proteins, poly- and oligopeptides and amino-acids, which is generally obtained from an animal or vegetable origin lysate and is used to act as a nutrient.

The composition can contain solely the adducts and the compounds, if any, associated with them (chelates, lysates etc.), but preferably it also comprises one or more solid or liquid, organic or inorganic excipients and carriers, acceptable and normally used in agriculture, such as, for example, clay, bentonite, dicalite, ground peat, water etc.

In the preferred compositions co-operating substances for working and application are also included to help dispersion, suspension, wettability and penetration. For example, these co-operants may be surface active substances, hydrophilic colloids such as carboxylmethylcellulose, alginates, gum arabic, gelatine and casein.

The composition according to the invention has shown to be effective on a wide range of vegetables such as, but not exclusively, the following:

cereals: rice, wheat, maize, oats, barley.

legumes: beans, peas and soya.

vegetables: tomatoes, egg-plants, artichokes, carrots, courgettes, peppers, garlic, potatoes, onions.

flowers: tulips, carnations, roses.

fruit trees and fruit: apples, pears, citrus fruits, peaches, grapes, kiwis.

The composition can be applied at every stage of growth of the vegetables, on any part of them or on the whole vegetable, and comes in known forms such as, powders, granules, pellets, dispersions, emulsions or solutions.

The composition can be applied also at the seed stage, immerging the seeds in a solution of the adduct or covering the seeds with a suitable formulation of the composition, for example similar to the one used for seed pelleting.

The germinating and/or propagating vegetable matter, such as for example seeds, scions and the like, treated with the composition according to the invention, that is to say, covered at least in part with the said composition, is a further aim of the invention.

The composition may furthermore be nebulized onto leaves and fruit of already developed plants or onto plant shoots at the germinating stage, during flowering or development of the fruit, or be applied to hydroponics where the plants are cultivated, or to the soil itself or to any other cultivation medium.

The dosing of the composition which is the object of the present patent depends on the species of plant being treated, on the portion of the plan being treated, on the growth stage, on the season and the environmental conditions, in a way which is known or easy to determine by a skilled technician.

Generally said compositions are applied at an interval ranging from 25 to 25.000 g/hectare of the active ingredient.

If applied in solution or emulsion, the concentration of the active ingredient can vary in a rather wide interval, generally ranging from 0.001 g/liter to 10 g/liter of solution or emulsion.

The growth of the plants treated with the compositions described in the present invention is greatly speeded up with respect to those which have not been treated. In particular, in grass and cereals, an advancement in ripening is obtained, as well as an increase of 10-15% of yield per unit (year).

EXAMPLE 1

One part of menadione nicotinamide bisulphite, 0.5 of surface active substance and 98.5 parts of bentonite are mixed in order to obtain a powder formulation.

EXAMPLE 2

Two parts of menadione nicotinamide bisulphite, 0.1 parts of Co chelate, 0.2 parts of Fe chelate, 0.1 parts of Mn chelate, 0.1 parts of Ni chelate, 2.5 parts of amino-acid pool are mixed with 95 parts of bentonite in order to obtain a powder formulation.

EXAMPLE 3

The products mentioned in the present invention and the powder diluents mentioned in Table 1 are mixed in the shown ratios in order to obtain a powder formulation.

TABLE 1

| Product | Parts in weight | Carrier | Parts in weight |
|---------|-----------------|---------|-----------------|
| A | 3 | Celite | 50 |
| Menadione | | | |
| Nicotinamide | | | |
| Bisulphite | | | |
| B | 2 | Clay | 50 |
| Menadione | | | |
| Adenine | | | |
| Bisulphite | | | |
| C | 2 | Bentonite | 50 |
| Menadione | | | |
| Tryptophan | | | |
| Bisulphite | | | |
| D | 2 | Dicalite | 40 |
| Menadione | | | |
| Histidine | | | |
| Bisulphite | | | |
| E | 3 | Bentonite | 40 |

Menadione

Thiamine

Bisulphite

| F | 2 | Bentonite | 50 |

Menadione

Nicotinamide

Bisulphite

| Co chelate | 0.1 |
| Fe chelate | 0.1 |
| Mg chelate | 0.1 |

Ni chelate

Soluble gelatine 2.5

--------------------------------------------------------------------------------

## EXAMPLE 4

In Neubauer containers measuring 1/400000 of an acre a mixture was placed, consisting of 500 g of earth, 3 g of fertilizer (N-$P_2O_5$-$K_2O$ (6:7:7)) and a pre-established quantity of a powder formulation prepared as in example No. 3 A Table 1.

Each of the containers was sown with 20 rice plant seeds, of the accelerated germination type, all of which was kept in a greenhouse at 25°C for 15 days.

The test was carried out by checking any possible modifications in growth by means of taking comparison with a sample which had not been treated with the powder formulation in example 3.

Measurements were taken of the stems and of the main roots, and the average growth was taken by reference to the untreated plants.

The results obtained are shown in the following table:

TABLE 2

| Experimental cultivation | Height increase | Length of main roots |
|---|---|---|
| Untreated | 100 | 100 |
| powder formulation | | |
| 0.5 g/cultivation | 119 | 112 |
| 1.0 g/cultivation | 137 | 126 |

As can be seen from Table 2, the growth of the shoots, the roots and the plants treated with the powder formulation of the present invention were accelerated.

EXAMPLE 5

20 mm diameter test tubes were filled with solutions of menadione thiamine bisulphite with 10 ppm concentration of active principle. Some rice plants in the second leafing stage with their main root cut to 1 mm were fixed with absorbent cotton around their stem and immersed in the test tubes, in such a way that the seeds remained 1 cm below the surface of each solution.

After having grown the shoots at 30°C under continuous radiation at 3.300 lux for 6 days, the length of the radicle was measured and its average was calculated with reference to the untreated ones.

The results are as shown in Table 3.

TABLE 3

| ppm concentration | Length of radicle |
|---|---|
| Untreated | 100 |
| Treated (10 ppm) | 164 |

As can be seen from table 3, treatment with solutions of menadione thiamine bisulphite favours the growth of shoots.

EXAMPLE 6

Seedling nurseries measuring 30 x 60 x 5 cm were filled with seedling beds to which were added respectively 4 g and 8 g of the powder formulation in example 3 F in Table 1.

Each of the seedling nurseries was sown with 210 g of unrefined rice seeds of the Arborio type and the seeds were covered with earth.

The shoots were made to break through the surface at 32°C for 2 days, allowed to become green at 25°C for another 2 days and then hardened off in the greenhouse.

After 21 days the stems of the shoots were examined and the relevant data is shown in Table 4.

The same day, 4 shoots per group were transplanted into pots corresponding to 0.02 m$^2$ and arranged in a biotron with a night/day high temperature range of 25°C/17°C and a day/night low temperature range of 17°C/12°C in order to increase sprouting after transplanting; the shoots were examined to verify the amount of the growth.

The data obtained by means of the sprouting test in the high temperature area and in the borderline low temperature area are summarized in Tables 5 and 6 which follow.

TABLE 4

Characteristics of the shoots

| Experimental cultivation | Age of shoots | Height (mm) | Weight of dry points (mg) | Number of roots |
|---|---|---|---|---|
| Untreated | 3.1 | 107 | 17.4 | 8.6 |
| Treated with powder formulation | | | | |
| 4 g/ex | 3.2 | 102 | 18.8 | 9.9 |
| Powder formulation | | | | |
| 8 g/ex | 3.1 | 103 | 18.7 | 8.9 |

According to the data in Table 4, the shoots treated with the powder formulation are not as tall but have a larger number of roots and greater weight of dry tops.

TABLE 5

Sprouting test in high temperature conditions

| Experimental cultivation | Age of shoots | Height mm | Total number of roots | Total number of fresh roots | Maximum length of roots |
|---|---|---|---|---|---|
| Untreated | 3.7 | 117 | 14 | 8 | 87 |
| Treated with powder formulation | | | | | |

| 4 g/ex | 3.7 | 112.6 | 15.4 | 9.4 | 95.3 |
| powder formulation | | | | | |
| 8 g/ex | 3.8 | 104.1 | 16.4 | 10.4 | 93.4 |

From the data in Table 5 an increase in the growth of new roots is verified and an increase in their maximum length compared with that of the untreated roots.

TABLE 6

Sprouting test in low temperature conditions

| Experimental cultivation | Age of shoots | Height mm | Total number of roots | Total number of fresh roots | Maximum length of roots |
|---|---|---|---|---|---|
| Untreated | 3.2 | 112.9 | 13 | 4.4 | 20.7 |
| Treated with | | | | | |
| powder formulation | | | | | |
| 4 g/ex | 3.1 | 107.6 | 12.0 | 6.6 | 12.9 |
| powder formulation | | | | | |
| 8 g/ex | 3.3 | 107.8 | 12.8 | 7.14 | 31.6 |
| powder formulation | | | | | |
| 16 g/ex | 3.2 | 109.3 | 14.8 | 8.5 | 32.9 |

From the data in Table 6 the number of fresh roots developed from non-treated sprouts was just 4.4, while there are 7 or 9 which developed from treated sprouts, which is near to the number observed in high temperature conditions.

These data show that the treatment with the growth regulators of the present invention is effective in stimulating the developments of the roots and sprouting at low temperature.

EXAMPLE 7

A comparative field trial was carried out between two non-adjacent plots of land, each having a surface area of 1/1000 hectare.

A water suspension of menadione nicotinamide bisulphite, as in Example 3 F in Table 1, with an optimum concentration of active principle of 500 g per hectare is homogeneously distributed on melon cultivations.

First pre-flowering treatment

Dosage of active principle: 0.5 Kg per hectare.

At the end of treatment, greater flowering and improvement of the vegetative tone was noted on the treated plot, together with a more intense shade of green and spreading of the leaf tone.

Second treatment

Dosage of active principle: 0.8 Kg per hectare.

Such treatment was carried out when the melons reached about 10 cm in diameter.

With respect to the untreated cultivation, greater resistance to the stressing effects of heat and irrigation variations was noted.

On the plot treated with the mixture, ripening was achieved 10 days before the untreated plot.

Improvement of the organoleptic characteristics, particularly of the sugar content and better structure of the flesh, was noted.

EXAMPLE 8

A field trial was carried out on non-adjacent plots of forage cultivation.

MEDICINAL GRASS AND MULTI-PLANT MEADOW

One of the plots was treated with a homogeneous distribution of a water solution containing menadione nicotinamide bisulphite with a dosage of active principle of 0.7 Kg per hectare.

There was only one treatment, which was carried out with the stems at a length of 10-15 cm.

LAWN

Administered dose: 0.5 Kg per hectare.

The treatment was carried out every twenty days beginning when the land temperature was 18°C.

Generally it was observed on the first cut forages, that after treatment there was an increase in development in general and particularly of graminaceous plants: earlier ripening (flowering), mowing of 10% of flowering carried out five days before the untreated plot.

An increase was noted of 10% of forage units for each quintal of hay.

EXAMPLE 9

Some cut chrysanthemum stems were immersed in solutions of menadione histidine bisulphite adduct with an active principle concentration of 1 ppm, 10 ppm and 100 ppm respectively, for 24 hours, and were then fixed in vermiculite and left in the greenhouse at 25°C for 14 days; the rooting system of the chrysanthemums was then examined and the average growth of the same was calculated in comparison with the data referring to chrysanthemums not treated with menadione histidine bisulphite adduct.

The table below gives the data of the experiment.

TABLE 7

| Concentration ppm | Rooting ratio % | Total length of new roots |
|---|---|---|
| Untreated | 100 | 100 |
| Treated | | |
| 1 | 107 | 110 |
| 10 | 118 | 216 |
| 100 | 143 | 492 |

As shown in Table 10, treatment with menadione histidine bisulphite favours root growth in chrysanthemums.

EXAMPLE 10

Some tomato seeds were sown in containers measuring 10 x 30 x 20 and containing 1000 g of soil onto which was dispersed 80 cc of a solution containing menadione nicotinamide bisulphite adduct, with an active principle concentration of 10 ppm and 100 ppm respectively; the seeds were then covered with more soil.

The tomatoes were grown in a greenhouse at 25° C for 28 days.

At the end of this period the fruit was weighed and compared with other tomatoes which had not been treated with the menadione nicotinamide bisulphite adduct, in order to obtain the growth ratio between the different samples.

The results follow in Table 8.

TABLE 8

| Concentration in ppm | % Weight of fruit |
|---|---|
| Untreated | 100 |
| Treated | |
| 10 | 121 |
| 100 | 137 |

EXAMPLE 11

A field trial was carried out on non-adjacent plots devoted to soya cultivation.

11

One plot was treated with the homogeneous distribution of menadione nicotinamide bisulphite, with a dosage of active principle of 0.7 Kg/hectare.

The treatment was carried out at sowing and 30 days after.

An increase in sprouting and growth advancement was noted.

At the end of production it was found that there was an increase both in green matter and in seeds.

EXAMPLE 12

A series of trials was carried out on different horticultural crops such as: courgettes, egg-plants, peppers, garlic, onions, potatoes and carrots, using as active principle Mnb (menadione nicotinamide bisulphite).

A general weight increase of 6/10% of the horticultural products was noted compared with the untreated products.

However, the greatest advantage was a general harvesting advancement period, 10 days before that of the untreated vegetables.

TABLE 9

| Concentration ppm | Type of vegetable | % Weight of vegetable |
|---|---|---|
| Untreated | all | 100 |
| Treated | | |
| 10 ppm | garlic | 106 |
| | onions | 109 |
| | carrots | 112 |
| | peppers | 107 |
| | potatoes | 114 |
| | egg-plants | 115 |
| | courgettes | 109 |

EXAMPLE 13

A field trial was carried out on two non-adjacent plots of land devoted to beet cultivation.

First treatment 40 days from sowing

Surface treated: 20 mq; plants treated: 13/mq.

The treatment was carried out with a water solution of menadione nicotinamide bisulphite with a dosage of active principle of 123 g/hectare.

Second treatment 70 days (approx.) after sowing

The treatment was carried out with menadione nicotinamide bisulphite with a dosage of active principle of 123 g/hectare.

The treatments were carried out on about 160 plants.

12

Generally a development was noted of the green part and the leaf part and an increase in weight of the roots compared with the untreated plants.

EXAMPLE 14

Containers measuring 5 x 30 x 20 cm were filled with 2000 g of sifted soil and sprinkled with a 150 cc of a solution of menadione histidine bisulphite with a concentration of active principle of 10, 50, 100 ppm respectively.

Some of the containers were sown with 30 seeds of some red root varieties (SCARLETGLOBE, INCA, RED FORCING, CHERRY BELLE and SAXA) and others with some white root varieties (ICICLE and SUMMER CROSS). The seeds were then covered with the soil.

The containers were kept in the greenhouse for 38 days at 22°C.

At the end of this period the roots were weighed and the weights were compared with the other weights of the roots not treated with the menadione histidine bisulphite compound, to obtain the growth ratio between the different samples.

The data are shown in Tables 11 and 12.

```
                          TABLE 10

    _____

                          Red roots

    Concentration ppm                     % Weight of roots

    _____

    Untreated                                   100

    Treated

      10                                        117

      50                                        120

    100                                         130

    _____

                          TABLE 11

    _____

                         White roots

    Concentration ppm                     % Weight of roots

    _____

    Untreated roots                             100

    Treated

      10                                        120

      50                                        124

    100                                         132

    _____
```

From the data shown in Tables 10 and 11 it will be noted that treatment with menadione histidine bisulphite adduct increases root weight.

EXAMPLE 15

Containers measuring 5 x 20 x 10 cm were filled with 700 g of earth sprinkled with 100 cc of a solution containing 10 and 100 ppm of menadione adenine bisulphite respectively.

Each of the containers was sown with 20 spinach seeds and covered with earth.

The containers were kept in the greenhouse at 25°C for 25 days. At the end of this period the top of the spinach was weighed to obtain the growth ratio between the different samples.

The data are shown in Table 12.

TABLE 12

| Concentration ppm | % Weight of roots |
|---|---|
| Untreated | 100 |
| Treated | |
| 10 | 121 |
| 100 | 138 |

From the data shown in Table 12 it will be noted that treatment with menadione adenine bisulphite increases the weight of spinach tops.

**Claims**

1. A method for the stimulation and control of the growth of vegetables characterized in applying onto at least part of the said vegetables and/or onto their cultivation medium a composition comprising at least one menadione bisulphite adduct with a compound chosen from among: nicotinamide, thiamine, p-aminobenzoic acid, tryptophan, histidine, adenine, nicotinic acid.

2. A method according to claim 1, characterized in using a composition comprising also one or more trace elements and/or an amino-acid pool, containing poly and oligopeptides and amino-acids.

3. A method according to claim 1 or 2, characterized in applying the said composition to the cultivation medium in a quantity of active principle within 25 to 25 x $10^3$ g/hectare.

4. A method according to one of the claims from 1 to 3, characterized in applying the said composition in the form of a solution and/or emulsion with a concentration of active principle within $10^{-3}$ and 10 g/liter.

5. A composition for the stimulation and control of the growth of vegetables, characterized in that it comprises at least one menadione bisulphite adduct with a compound chosen from among: nicotinamide, thiamine, p-aminobenzoic acid, tryptophan, histidine, adenine, nicotinic acid.

6. A composition according to claim 5, characterized in that it comprises one or more chelate trace elements.

7. A composition according to claim 5 or 6, characterized in that it furthermore comprises an amino-acid pool containing poly and/or oligopeptides and amino-acids.

8. A composition according to one of the claims from 5 to 7, characterized in that it comprises one or

14

more solid or liquid, organic or inorganic excipients and carriers acceptable in agriculture, such as clay, bentonite, dicalite, ground turf, water and similar.

9. A composition according to claim 8, characterized in that it furthermore comprises agents aiding working and application such as surface active substances, hydrophilic colloids, alginates, gum arabic, gelatine, casein and suchlike.

10. Use of a composition according to one of claims from 5 to 9 for the control and stimulation of growth and/or ripening of vegetables.

11. Use of menadione bisulphite adducts with a compound selected from: nicotinamide, thiamine, p-aminobenzoic acid, tryptophan, histidine, adenine, nicotinic acid, as active principle for stimulating and controlling vegetable growth.

12. Germinative or propagative vegetable matter, characterized in that it is at least partially treated with a composition according to one of claims from 5 to 9.

15

European
Patent Office

EUROPEAN SEARCH
REPORT

Application Number

EP 91 11 0374

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 764 201 (Y. IINO et al.)<br>* Column 1, line 1 - column 3, line 18 *<br>– – – | 1-12 | A 01 N 41/04 |
| Y,D | GB-A-2 025 976 (L. STOPPANI)<br>* Claims 1-6; page 1, lines 16-60 *<br>– – – | 1-12 | |
| A | WO-A-7 900 838 (M.J. SAMPSON)<br>* Page 3, (c)(d)(g) *<br>– – – | 1,5,11 | |
| A | DE-C-885 992 (P.P. HOPF et al.)<br>* Claims 1,5 *<br>– – – | 1,5,11 | |
| A | DE-C-747 961 (E. AUHAGEN)<br>* Claim *<br>– – – | 1,5,11 | |
| A | DE-C-689 219 (I.G. FARBENINDUSTRIE)<br>* Claim *<br>– – – – – | 1,5,11 | |

**TECHNICAL FIELDS SEARCHED (Int. Cl.5)**

A 01 N

The present search report has been drawn up for all claims

| Place of search | Date of completion of search | Examiner |
|---|---|---|
| The Hague | 09 October 91 | DECORTE D. |